# EUROPÄISCHE PATENTANMELDUNG

(11) **EP 2 913 524 A1**
(43) Veröffentlichungstag der Anmeldung: **02.09.2015**
(21) Anmeldenummer: 15154456.6
(22) Anmeldetag: 10.02.2015
(51) Int. Cl.: F03G 7/10

(54) **Antriebsvorrichtung**

(30) Priorität: 26.02.2014 EP 14000676
(71) Anmelder: Hertel, Eric Roger, 67661 Kaiserslautern (DE)
(72) Erfinder: Hertel, Eric Roger, 67661 Kaiserslautern (DE)
(74) Vertreter: Patentanwälte Dr. Keller, Schwertfeger

(57) **Zusammenfassung**

Die Erfindung betrifft eine Antriebsvorrichtung, umfassend ein Gerüst (12) mit einer drehbar gelagerten, horizontalen Antriebswelle (14, 114), ein als zweiseitiger Hebel (20) ausgebildetes Rotationselement (16; 116a,116b,116c; 316) mit einer Stangenkonstruktion (18) und zwei Hohlkörpern (26a, 26b; 226a, 226b; 326a, 326b), die jeweils an den äußeren Enden der Stangenkonstruktion (18) angeordnet und befestigt sind, wobei die Antriebswelle (14; 114) die Drehachse des Rotationselements (16; 116a, 116b, 116c; 316) bildet und die Stangenkonstruktion (18) in zwei Hebelarme (22a, 22b) unterteilt, und eine Fluidvorrichtung mit einer Rohrleitung (34; 234), die entlang der Längsachse der Stangenkonstruktion (18) angeordnet ist und an ihren beiden Endabschnitten jeweils in einen der beiden Hohlkörper (26a, 26b; 226a, 226b; 326a, 326b) mündet, wobei die beiden Hohlkörper (26a, 26b; 226a, 226b; 326a, 326b) und die Rohrleitung (34; 234) ein im Wesentlichen geschlossenes System für ein Fluid ausbilden, zwei stempelartigen Verdrängungskörpern (36a, 36b; 236a, 236b; 336b), die jeweils in einem Hohlkörper (26a, 26b; 226a, 226b; 326a, 326b) in Axialrichtung des Hohlkörpers (26a, 26b; 226a, 226b; 326a, 326b) verschiebbar gelagert sind, wobei das Volumen des Verdrängungskörpers (36a, 36b; 236a, 236b; 336b) kleiner als das Innenvolumen des Hohlkörpers (26a, 26b; 226a, 226b; 326a, 326b) ist.

## Beschreibung

Die vorliegende Erfindung betrifft eine Antriebsvorrichtung sowie ein Verfahren zum Betreiben der Antriebsvorrichtung.

Es gibt eine Vielzahl verschiedener Antriebsvorrichtungen. Antriebsvorrichtungen dienen im Allgemeinen dazu, eine Maschine mittels Energieumformung zu bewegen oder einen Generator zur Stromerzeugung anzutreiben.

Bei vielen Antriebsvorrichtungen werden zur Erzeugung von Energie Brennstoffe benötigt.

Da beim Verbrennen der Brennstoffe unerwünschte Abgase entstehen und insbesondere fossile Brennstoffe nicht unbegrenzt zur Verfügung stehen, ist der Bedarf nach alternativen Antrieben groß, die umweltfreundlich und ohne Verbrauch von Brennstoffen arbeiten.

Inzwischen werden bekanntermaßen alternative Antriebe angeboten und eingesetzt, bei denen keine Brennstoffe benötigt werden, wie etwa Solarantriebe, Windkraftantriebe oder Wasserkraftantriebe in Form von Gezeitenkraftwerken.

Diese genannten Alternativen zur Erzeugung von Energie haben jedoch den Nachteil, dass sie von bestimmten äußeren Parametern abhängig sind.

So kann ein Solarantrieb beispielsweise nur tagsüber verwendet werden. Windkraftantriebe liefern nur dann Energie, wenn Wind herrscht, und Gezeitenkraftwerke müssen sich an die Gezeiten anpassen.

Es ist daher Aufgabe der vorliegenden Erfindung, einen umweltfreundlichen Antrieb, d.h. einen Antrieb ohne Verwendung von Brennstoffen bereitzustellen, der standort- und zeitunabhängig eingesetzt werden kann.

Erfindungsgemäß wird die Aufgabe durch die Antriebsvorrichtung gemäß dem Gegenstand des Anspruchs 1 gelöst.

Bei der erfindungsgemäßen Antriebsvorrichtung ist eine Antriebswelle mit einem Rotationselement verbunden, wobei das Rotationselement wiederum mit einer Fluidvorrichtung ausgestattet ist.

Unter Fluidvorrichtung wird im Rahmen der Erfindung eine Vorrichtung verstanden, bei der mechanische Bauteile in einem im Wesentlichen geschlossenen System, d.h.in einem im Wesentlichen fluiddichten System mittels eines Fluids wie Flüssigkeit und/oder Gas betätigt werden.

Die Erfindung verwendet zur Erzeugung einer Drehbewegung der Antriebswelle die im Rotationselement eingebrachte potentielle Energie.

Im Detail wird hierzu ein drehbar gelagerter, zweiseitiger Hebel des Rotationselements mit zwei im Wesentlichen gleich langen Hebelarmen in eine vertikale Position gebracht. An den Enden der Hebelarme des Hebels sind jeweils vorzugsweise im Wesentlichen identisch aufgebaute Hohlkörper befestigt. Hierbei befindet sich in dem oberen Hohlkörper ein Fluid, während im dem unteren Hohlkörper kein Fluid enthalten ist. Hierdurch weist der obere Hohlkörper eine größere Masse auf als der untere Hohlkörper. Wird der Hebel nun aus seiner vertikalen Position ausgelenkt, bewirkt die unterschiedliche Gewichtsverteilung in den beiden Hohlkörpern, dass sich der Hebel dreht. Bei einem ausreichenden Massenunterschied zwischen den beiden Hohlkörpern und einer ausreichenden Auslenkung des Hebels führt dies dazu, dass der mit Fluid gefüllte Hohlkörper nach unten schwingt und der Hohlkörper ohne Fluid nach oben geschwenkt wird. Die in dem oberen, mit Fluid gefüllten Hohlkörper gespeicherte potentielle Energie, die nicht für die Rotationsbewegung verbraucht wird, kann beispielsweise zum Antreiben einer Maschine genutzt werden, die über die drehbar gelagerte horizontale Antriebswelle mit dem zweiseitigen Hebel verbunden ist.

Die Fluidvorrichtung ist vorgesehen, um den Antrieb nach dem Rotationsvorgang wieder zu aktivieren, d.h. in den Ausgangszustand zu überführen, in dem der mit Fluid gefüllte Hohlkörper sich in der oberen Position befindet.

Bei einer bevorzugten Ausführungsform sind die beiden Verdrängungskörper und die Rohrleitung starr miteinander verbunden und bilden einen Hydrostempel aus, wobei der Hydrostempel verschiebbar in dem Rotationselement gelagert ist.

Befinden sich nach der Drehung des Rotationselements wieder beide Hohlkörper vertikal übereinander, drückt der Verdrängungskörper im unteren Hohlkörper bzw. der Hydrostempel aufgrund der Schwerkraft bzw. Gewichtskraft auf das Fluid im unteren Hohlkörper, so dass das Fluid in den oberen Hohlkörper gedrückt wird.

Sobald sich das Fluid wieder im Wesentlichen vollständig in dem oberen Hohlkörper befindet, kann der Bewegungsablauf von vorne beginnen.

Gemäß einer bevorzugten Ausführungsform sind an beiden Endabschnitten der Rohrleitung Gleitrohre vorgesehen. Vorzugsweise sind die Gleitrohre federnd gelagert und ragen im mit Fluid gefüllten oberen Hohlkörper aus dem Fluid heraus. Auf diese Weise wird sichergestellt, dass das vom unteren Hohlkörper in den oberen Hohlkörper gedrückte Fluid von oben auf den Fluidspiegel gelangt und somit zur stetigen Massenerhöhung der Gesamtheit Hydrostempel und Fluid im oberen Hohlkörper beiträgt. Im unteren Hohlkörper ist das entsprechende Gleitrohr im Wesentlichen vollständig in der Rohrleitung versenkbar, um ein vollständiges Absenken des Hydrostempels auf den Boden des Hohlkörpers zu ermöglichen. Zusätzlich oder alternativ sind die Gleitrohre so ausgebildet, dass sie in dem verwendeten Fluid auftreiben bzw. schwimmen.

Zur Vermeidung einer Torsion der Gleitrohre in der Rohrleitung weisen die Gleitrohre vorzugsweise wenigstens eine Längsnut auf. Mit Hilfe der Längsnuten ist es darüber hinaus einfach möglich, einen Höhenanschlag zur Begrenzung der Auslängung jedes Gleitrohres aus der Rohrleitung bereitzustellen.

Weiterhin ist es bevorzugt, dass an den freien Enden der Gleitrohre jeweils ein Mündungsbereich mit Öffnungen vorgesehen ist, um einen Fluidfluss in und aus dem jeweiligen Gleitrohr auch dann sicherzustellen, wenn sich das freie Ende des Gleitrohres an dem Hohlkörper abstützt. Beispielsweise können die Öffnungen im Mündungsbereich seitlich an den Gleitrohren angebracht sein. Zusätzlich oder alternativ können ein Absatz oder ein Steg oberhalb des Gleitrohrs vorgesehen sein, um ein Austreten des Fluids aus der Stirnseite des Gleitrohrs zu ermöglichen.

Es ist weiter bevorzugt, dass die Fluidmenge so bemessen ist, dass, wenn in jedem Hohlkörper die Verdrängungskörper angeordnet sind, einer der beiden Hohlkörper und die Rohrleitung vollständig mit dem Fluid gefüllt sind, während der andere der beiden Hohlkörper kein Fluid enthält. Auf diese Weise lässt sich eine sehr gute Gewichtsverteilung in dem Rotationselement herstellen. Mit anderen Worten wird hierdurch eine möglichst große Gewichtsdifferenz zwischen den beiden Hohlkörpern in einer Grundposition, in der sich der mit Fluid gefüllte Hohlkörper in der oberen Position befindet, bewirkt.

Bei einer bevorzugten Ausführungsform ist eine Brems- und/oder Stoppvorrichtung für das Rotationselement vorgesehen. Zusätzlich kann eine Rücklaufstoppvorrichtung vorgesehen sein. Dies hat den Vorteil, dass das Rotationselement ausgehend von einer Grundposition, in der sich der mit Fluid gefüllte Hohlkörper in der oberen Position befindet, in einer Zwischenposition, in der sich der mit Fluid gefüllte Hohlkörper in der unteren Position befindet, gebremst oder gestoppt wird, ohne dass eine unerwünschte Pendelbewegung oder Umkehrbewegung des Rotationselements auftritt.

Weiterhin ist es von Vorteil, dass eine Auslenkvorrichtung vorgesehen ist. Die Auslenkvorrichtung bewirkt, dass das Rotationselement automatisch, d.h. ohne äußere Einflüsse aus einer Grundposition, in der sich der mit Fluid gefüllte Hohlkörper in der oberen Position befindet, ausgelenkt wird, so dass eine Drehbewegung des Rotationselements in die vorgesehene Richtung gestartet wird.

Es ist bevorzugt, dass die Auslenkvorrichtung einen Auslöse-/Blockiermechanismus umfasst.

Bei einer vorteilhaften Weiterbildung der Antriebsvorrichtung ist der Hydrostempel mittels des Auslöse-/Blockiermechanismus steuerbar. Hierdurch kann gewährleistet werden, dass die Drehbewegung erst gestartet wird, wenn sichergestellt ist, dass sich das Rotationselement in der Grundposition befindet.

Das Zusammenspiel der Brems-/und oder Stoppvorrichtung, der Auslenkvorrichtung und des Auslöse-/Blockiermechanismus bewirkt somit den richtigen Funktions- und Zeitablauf der Antriebsvorrichtung.

Um einen möglichst effektiven Antrieb zu erhalten, muss die Fluidvorrichtung, welche das Fluid enthält, möglichst reibungsarm arbeiten, was bedeutet, dass die Verdrängungskörper im jeweiligen Hohlkörper und gegebenenfalls das starre Rohr bzw. der Hydrostempel möglichst reibungsarm gleiten. Darüber hinaus muss die Fluidvorrichtung auch möglichst fluiddicht sein, damit kein Fluid verloren geht.

Gemäß einer bevorzugten Ausführungsform ist es daher von Vorteil, dass jeder Verdrängungskörper im Wesentlichen gleitdichtend mit der Seitenwand des Hohlkörpers abschließt.

Bei einer zusätzlichen oder alternativen Ausführungsform, bei der die starre Rohrleitung mit den Verdrängungskörpern verbunden ist und die starre Rohrleitung und der Verdrängungskörper den Hydrostempel bilden, ist es von Vorteil, dass die Rohrleitung über Führungsbuchsen in der Stangenkonstruktion gleitend gelagert ist.

Es hat sich darüber hinaus herausgestellt, dass es von Vorteil ist, dass der Hohlkörper ein Hohlzylinder ist. Somit kann der Verdrängungskörper möglichst reibungsarm im Hohlkörper verschoben werden.

Weiterhin hat es sich als besonders vorteilhaft erwiesen, dass der Verdrängungskörper ebenfalls als Zylinder ausgebildet ist, wobei das Volumen des Verdrängungskörpers vorzugsweise in etwa die Hälfte des Innenvolumens des Hohlzylinders ausmacht.

Es ist vorteilhaft, dass jeder Hohlkörper wenigstens eine Belüftungsvorrichtung und/oder eine Befüllungsvorrichtung für das Fluid aufweist.

Bei einer bevorzugten Ausführungsform ist eine Druckerzeugungsvorrichtung vorgesehen, die auf die Verdrängungskörper in dem Hydrostempel wirkt, um zusätzlich zu der Gewichtskraft bzw. Schwerkraft des Hydrostempels eine weitere Kraft auf das Fluid auszuüben. Die zusätzlich durch die Druckerzeugungsvorrichtung erzeugte Kraft bewirkt, dass das Fluid schneller oder wenn erforderlich vollständig von dem unteren Hohlkörper in den oberen Hohlkörper verdrängt wird.

Die Druckerzeugungsvorrichtung kann gemäß einer bevorzugten Weiterbildung als Steuervorrichtung für den Hydrostempel ausgelegt sein und dazu dienen, den Hydrostempel in einer gewünschten Position zu halten. Gegebenenfalls kann die Druckerzeugungsvorrichtung die Funktion des Auslöse- und Blockiermechanismus übernehmen, so dass bei dieser bevorzugten Ausführungsform der Auslöse- und Blockiermechanismus durch die Durcherzeugungsvorrichtung ersetzt ist.

Vorzugsweise sind die folgenden Vorrichtungen: Brems- und/oder Stoppvorrichtung, Auslenkvorrichtung, Belüftungs- und Ventilvorrichtung, Befüllungsvorrichtung, Auslöse-/Blockiermechanismus und Druckerzeugungsvorrichtung magnetisch, mechanisch, elektronisch, hydraulisch, pneumatisch oder mittels einer Kombination hiervon aktivierbar, insbesondere schalt- und steuerbar.

Bei einer bevorzugten Ausführungsform ist das Rotationselement lösbar mit der Antriebswelle verbunden.

Bei einer bevorzugten Weiterbildung ist eine Vielzahl von Rotationselementen vorgesehen, wobei wenigstens ein Rotationselement lösbar mit der Welle verbunden ist.

Gegenstand der vorliegenden Erfindung ist auch ein Verfahren zum Betreiben einer erfindungsgemäßen Antriebsvorrichtung.

Eine bevorzugte Ausführungsform der Erfindung wird anhand der beigefügten Zeichnungen näher erläutert, in denen zeigen:
- Figur 1: eine perspektivische Ansicht der Antriebsvorrichtung gemäß einer ersten Ausführungsform;
- Figur 2: einen Querschnitt durch ein Rotationselement gemäß der ersten Ausführungsform;
- Figur 3: einen Hydrostempel gemäß einer ersten Ausführungsform;
- Figur 4: einen Verdrängungskörper in zerlegter Darstellung gemäß einer ersten Ausführungsform;
- Figur 5: eine perspektivische Ansicht einer Auslenkvorrichtung gemäß einer ersten Ausführungsform;
- Figur 6: eine Seitenansicht der Auslenkvorrichtung gemäß einer ersten Ausführungsform;
- Figur 7: einen vergrößerten Ausschnitt des in Figur 2 dargestellten Querschnitts durch das Rotationselement;
- Figur 8: einen Teil einer Brems- und/oder Stoppvorrichtung;
- Figur 9: einen Teil einer Brems- und/oder Stoppvorrichtung in teilweise zerlegter Darstellung;
- Figur 10: eine Gruppe von Rotationselementen;
- Figur 11: einen Hydrostempel einer Antriebsvorrichtung gemäß einer zweiten Ausführungsform;
- Figur 12: ein Gleitrohr;
- Figur 13: einen Querschnitt durch ein Rotationselement gemäß einer zweiten Ausführungsform einer Antriebsvorrichtung;
- Figur 14: eine Querschnitt durch einen Hohlkörper in einer oberen Position in perspektivischer Ansicht;
- Figur 15: einen Querschnitt durch einen Hohlkörper in einer unteren Position in perspektivischer Ansicht;
- Figur 16: einen Querschnitt durch einen Hohlkörper in einer oberen Position;
- Figur 17: eine perspektivische Ansicht einer Auslenkvorrichtung gemäß einer zweiten Ausführungsform und;
- Figur 18: eine dritte Ausführungsform einer Antriebsvorrichtung in perspektivischer Ansicht.

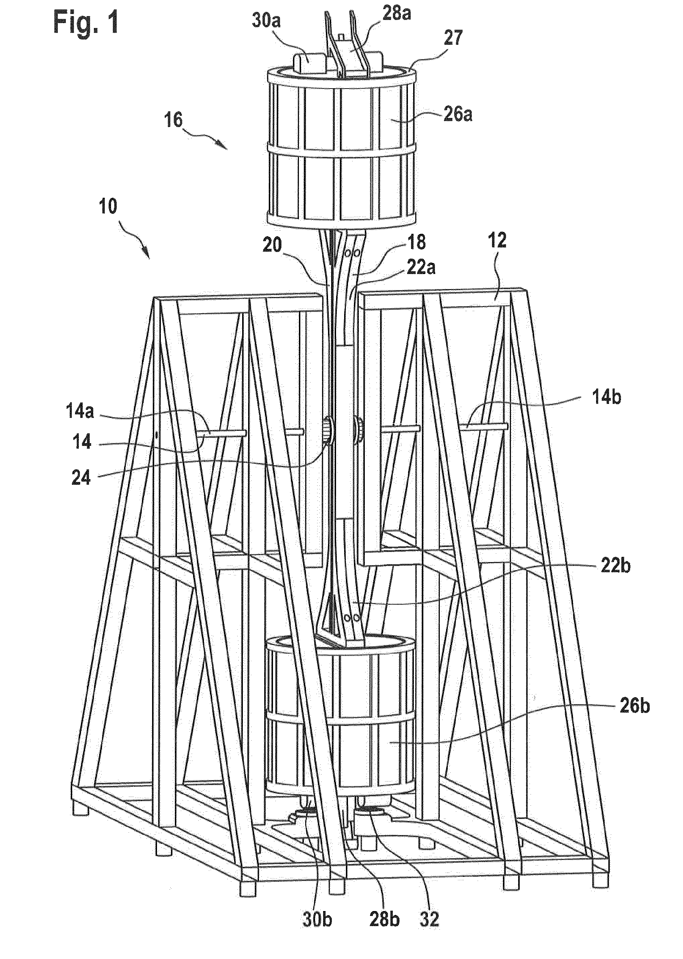

Figur 1 zeigt eine perspektivische Ansicht einer Antriebsvorrichtung 10 gemäß einer ersten Ausführungsform. Die Antriebsvorrichtung 10 umfasst ein Gerüst 12 mit einer drehbar gelagerten horizontalen Welle 14 und einem senkrecht zur Welle 14 ausgerichteten Rotationselement 16.

Das Rotationselement 16 ist als zweiseitiger Hebel 20 ausgebildet und umfasst eine Stangenkonstruktion 18, an deren mittlerem Abschnitt senkrecht zu der Stangenkonstruktion die Welle 14 angeordnet ist, so dass die Welle 14 die Drehachse des Rotationselements 16 bildet und die Stangenkonstruktion in zwei Hebelarme 22a, 22b teilt, wobei sich die Hebelarme 22a, 22b jeweils von der Welle 14 nach außen erstrecken.

Die Welle 14 umfasst zwei Wellenabschnitte 14a, 14b, die beidseitig des Rotationselements 16 angeordnet und lösbar mit dem Rotationselement 16 verbunden sind. Für die lösbare Verbindung des Rotationselements 16 mit der Welle 14 ist eine Ankoppeleinheit 24 beispielsweise bestehend aus Flanschen, Kupplung und Rücklaufstopp vorgesehen.
Die dem Rotationselement 16 entfernt liegenden Enden der beiden Wellenabschnitte 14a, 14b können mit entsprechenden Arbeitsmaschinen wie etwa Pumpen oder Generatoren verbunden werden.

Weiter umfasst das Rotationselement 16 zwei Hohlkörper 26a und 26b, die jeweils an den äußeren Enden der Hebelarme 22a, 22b angeordnet und befestigt sind. Die beiden Hebelarme 22a, 22b sind im Wesentlichen gleich lang, so dass die beiden Hohlkörper 26a und 26b in etwa im gleichen Abstand von der Welle 14 angeordnet sind. Die beiden Hohlkörper 26a, 26b weisen in etwa die gleiche Masse auf.

Die Hohlkörper 26a, 26b sind jeweils zylindrisch ausgebildet. Die Längsachsen der Hohlkörper 26a und 26b bilden eine Verlängerung der durch die Stangenkonstruktion 18 hindurchgehenden Achse.

Die Hohlkörper 26a, 26b können zum Zwecke der Montage jeweils an der Ober- und/oder Unterseite einen Deckel aufweisen.

An der axial nach außen weisenden Seite 27 des Hohlkörpers 26a, 26b ist jeweils eine Auslenkvorrichtung 28a, 28b sowie eine Steuervorrichtung 30a, 30b zum Arretieren und Lösen des Rotationselements 16 vorgesehen. Die Steuervorrichtungen 30a, 30b zum Arretieren und Lösen des Rotationselements 16 bilden einen Teil einer Brems- und/oder Stoppvorrichtung für das Rotationselement 16.

Die beiden Hohlkörper 26a, 26b sowie die jeweiligen Auslenkvorrichtungen 28a, 28b und Steuervorrichtungen 30a, 30b zum Arretieren und Lösen des Rotationselements 16 sind baugleich ausgebildet, wobei die Steuervorrichtungen 30a, 30b zum Arretieren und Lösen des Rotationselements 16 jeweils im Wesentlichen mittig auf der jeweils axial nach außen weisenden Seite 27 des Hohlkörpers 26a, 26b befestigt sind.

Im Gerüst 12 sind im Bodenbereich Rastelemente 32 der Brems- und/oder Stoppvorrichtung für das Rotationselement 16 vorgesehen.

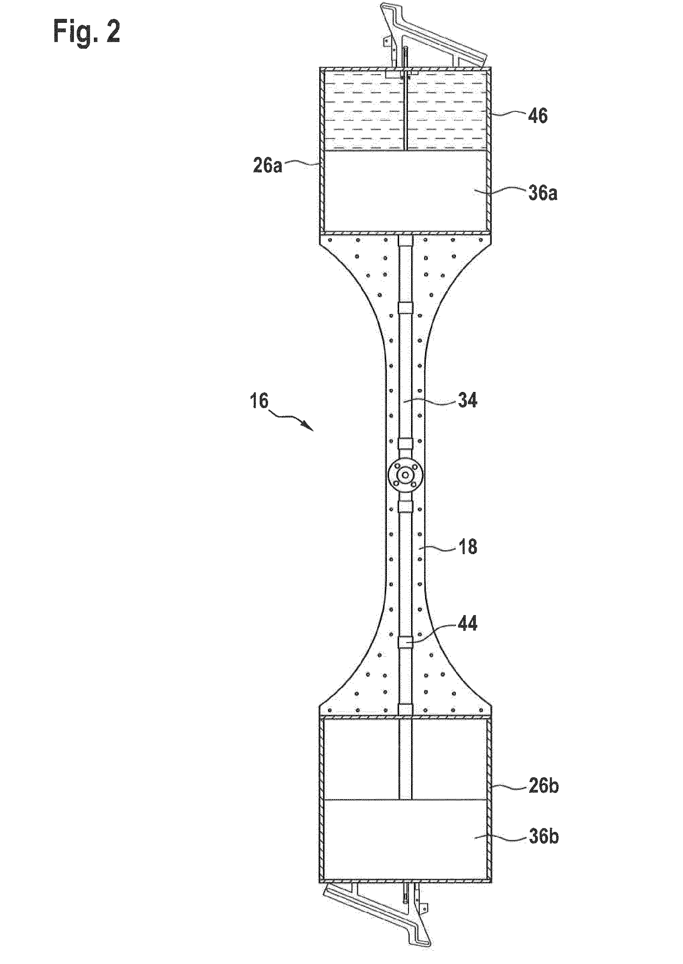

Figur 2 zeigt einen Querschnitt durch das Rotationselement 16.

Die beiden Hohlkörper 26a und 26b sind über eine Rohrleitung 34, die entlang der Längsachse des Stangenelements 18 angeordnet ist, verbunden.

Die beiden Hohlkörper 26a und 26b sowie die Rohrleitung 34 bilden im Wesentlichen ein geschlossenes System für ein Fluid. Das Fluid kann gasförmig und/oder flüssig sein. Vorzugsweise handelt es sich bei dem Fluid um Wasser oder um ein Öl.

Gegebenenfalls können dem Fluid Zusatzstoffe beigegeben werden, wie etwa Frostschutzmittel, Reinigungsmittel und/oder Gleitmittel, die beispielsweise die Oberflächenspannung des Fluids verändern oder zur Desinfektion beitragen.

In jedem Hohlkörper 26a, 26b ist jeweils ein stempelartiger, zylindrischer Verdrängungskörper 36a, 36b angeordnet, der in dem Hohlkörper 26a, 26b in Axialrichtung des Hohlkörpers 26a, 26b verschiebbar gelagert ist.

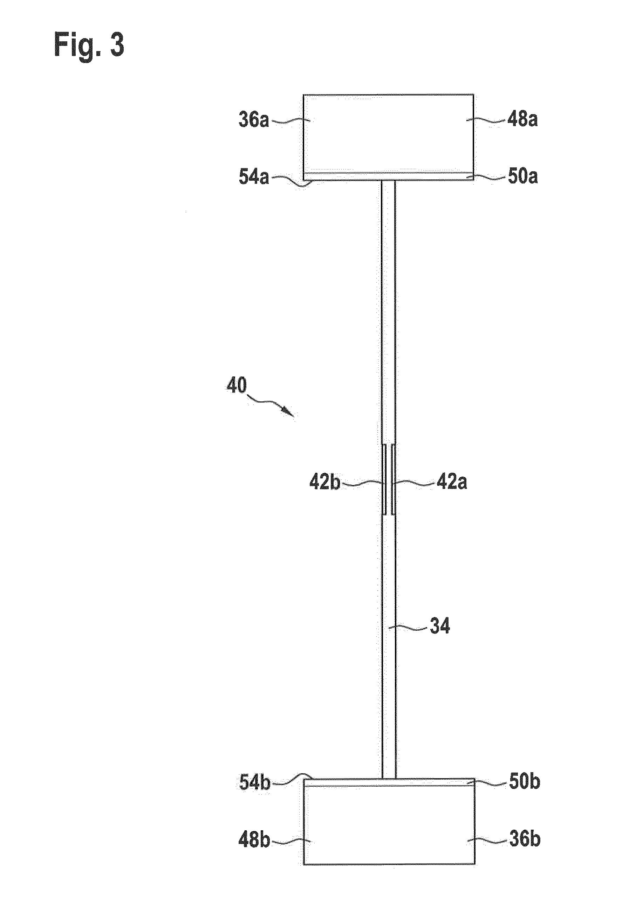

Die beiden Verdrängungskörper 36a, 36b und die starre Rohrleitung 34 bilden einen Hydrostempel 40, wobei die beiden Verdrängungskörper 36a, 36b jeweils an den Endabschnitten der Rohrleitung 34 angeordnet und mit dieser verbunden sind (siehe Figur 3).

Die starr ausgebildete Rohrleitung 34 weist Führungsschlitze 42a, 42b auf, in die Nocken an den Stirnflächen der beiden Wellenabschnitte 14a, 14b eingreifen (siehe Figur 3). Hierdurch wird ein Verdrehen (Torsion) des Hydrostempels 40 verhindert. Weiterhin sind zur Führung der Rohrleitung 34 Gleitlager 44 für ein reibungsarmes Gleiten in der Stangenkonstruktion 18 vorgesehen.

In jedem Verdrängungskörper 36a, 36b ist in der Verlängerung der Rohrleitung 34 ein Kanal vorgesehen, um durch den Hydrostempel 40 hindurch eine Fluidverbindung zwischen den beiden Hohlkörpern 26a, 26b herzustellen. Hierbei ragt die Rohrleitung 34 zumindest abschnittsweise in den Kanal hinein.

Bei nicht dargestellten Ausführungsformen ist die Rohrleitung im Kanal der Verdrängungskörper im Wesentlichen vollständig angeordnet oder ragt sogar aus dem Verdrängungskörper hinaus. Der Kanal der Verdrängungskörper 36a, 36b weist eine Öffnung auf, die in den jeweiligen Hohlkörper 26a, 26b mündet.

Figur 2 zeigt die Antriebsvorrichtung 10 in einer Grundposition, in der sich der mit Fluid gefüllte Hohlkörper 26a in der oberen Position befindet. Die Verdrängungskörper 36a, 36b ruhen jeweils im unteren Abschnitt des Hohlkörpers 26a bzw. 26b.

Das Volumen des im Hohlkörper 26a, 26b untergebrachten Teils des Hydrostempels 40, umfassend den Verdrängungskörpers 36a, 36b und einen Abschnitt der Rohrleitung 34, ist kleiner als das Innenvolumen eines Hohlkörpers 26a, 26b. Vorzugsweise füllt der im Hohlkörper 26a, 26 untergebrachte Teil des Hydrostempels 40, umfassend den Verdrängungskörper 36a, 36b und einen Abschnitt der Rohrleitung 34, in etwa die Hälfte des Innenvolumens des Hohlkörpers 26a, 26b aus.

Jeder Verdrängungskörper 36a, 36b ist gleitdichtend mit der Seitenwand 46 des Hohlkörpers 26a, 26b ausgerichtet.

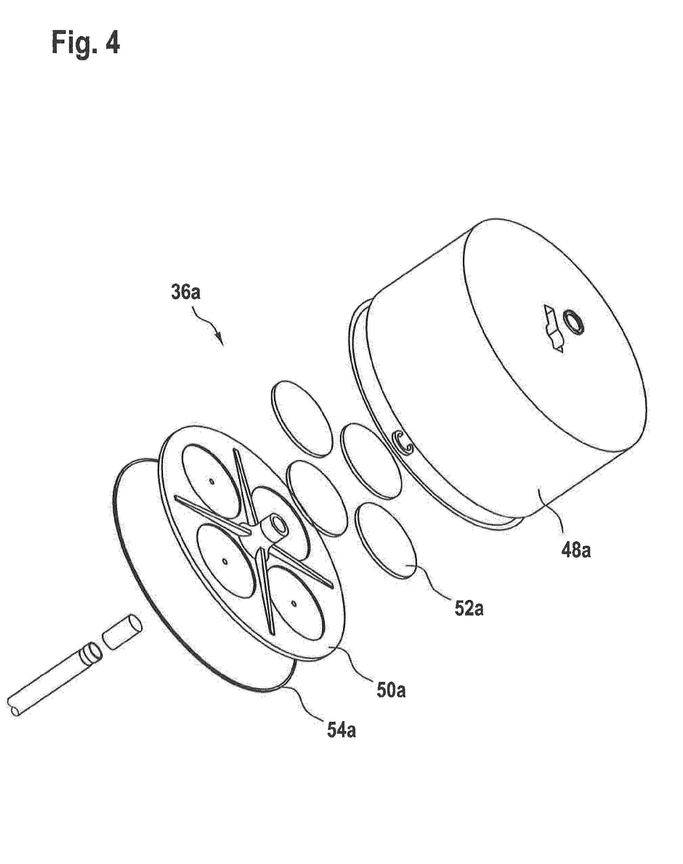

Vorzugsweise umfasst, wie in Figur 4 dargestellt, jeder Verdrängungskörper 36a, 36b einen zylindrischen Grundkörper 48a, 48b mit einem geringen spezifischen Gewicht und mit wenigstens einem flüssigkeitsdichten Hohlraum, um die Masse des Grundkörpers 48a, 48b gering zu halten. Der Grundkörper 48a, 48b ist mit einer Gewichtsplatte 50a, 50b aus einem Material mit einem hohen spezifischen Gewicht verbunden, beispielsweise einer Metallplatte. Optional können Gewichtsscheiben 52a vorgesehen sein, um das Gewicht der Gewichtsplatte 50a, 50b zu erhöhen.

Die Gewichtsplatten 50a, 50b können zwischen Rohrleitung 34 und Grundkörper 48a, 48b oder an den freien Enden der Grundkörper 48a, 48b angeordnet sein.

Vorzugsweise besteht der Grundkörper 48a, 48b aus einem druckfesten Kunststoff und die Gewichtsplatte 50a, 50b aus einer Wolframlegierung. Hierbei ist es weiter bevorzugt, dass der Kunststoff gegenüber dem eingesetzten Fluid unempfindlich ist und das eingesetzte Fluid nicht absorbiert.

Darüber hinaus sind Dichtungen 54a, 54b vorgesehen, die gleitdichtend auf die Innenwand 46 der Hohlkörper 26a, 26b wirken.

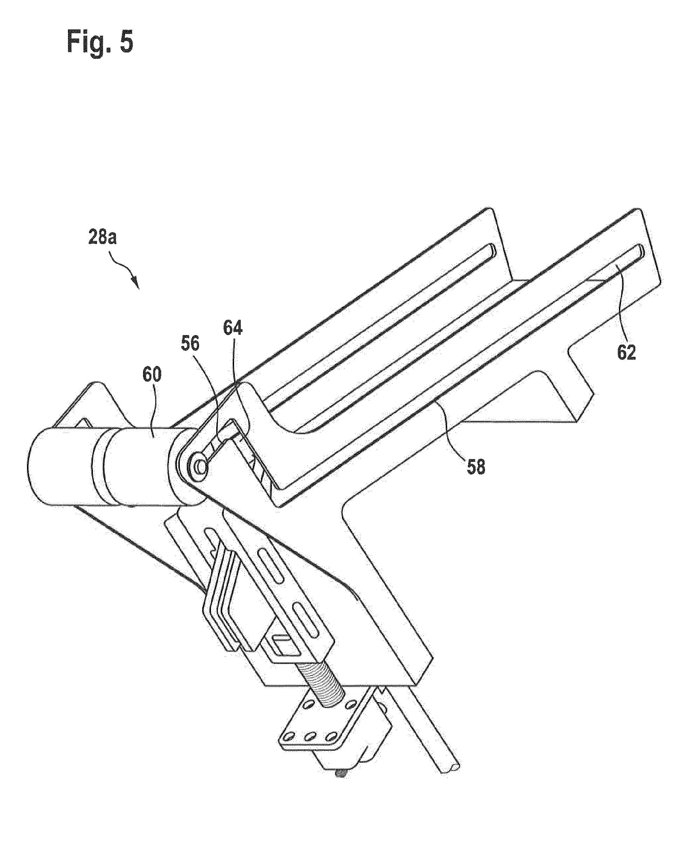

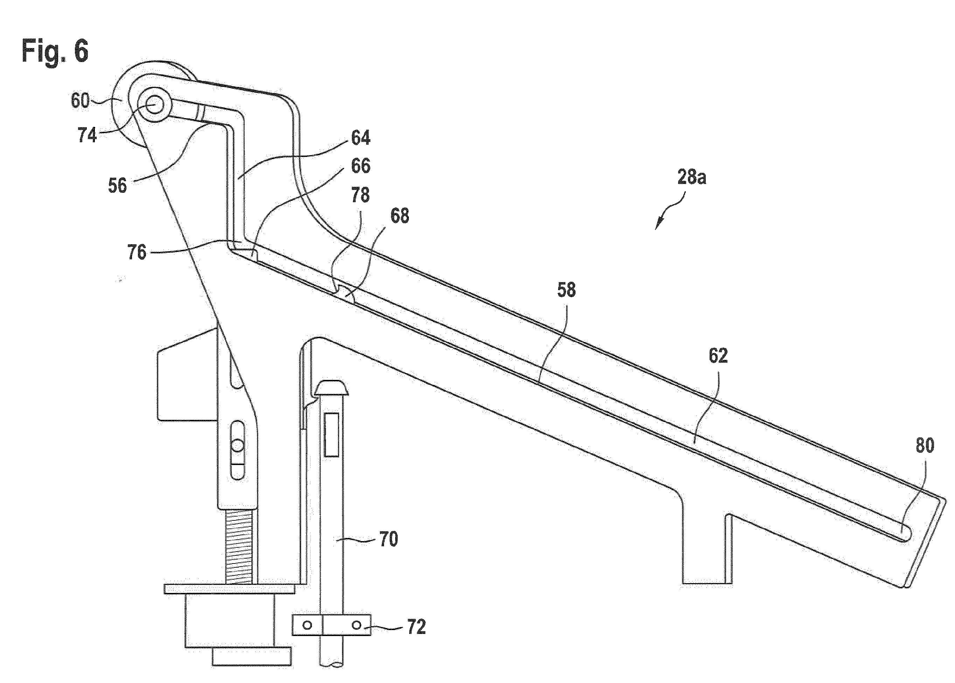

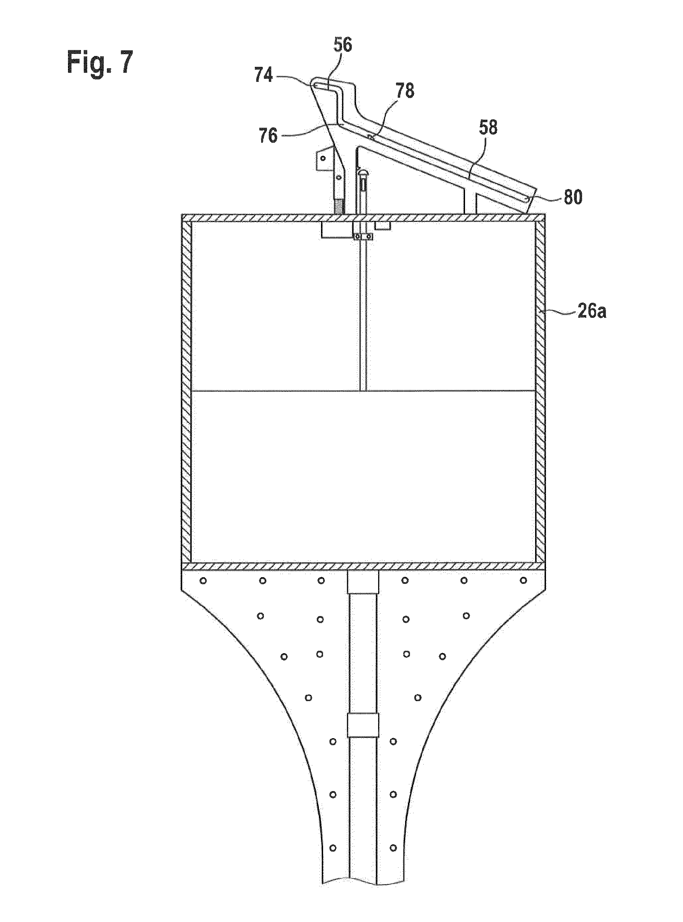

Die Figuren 5 bis 7 zeigen die Auslenkvorrichtung 28a auf dem Hohlkörper 26a im Detail. Die Auslenkvorrichtung 28a weist zwei hintereinander liegende schiefe Ebenen 56, 58 auf, auf der eine Walze 60 entlang gleitet bzw. rollt. Die Bewegung der Walze 60 wird in einer Führungsrille 62 geführt.

Die schiefen Ebenen 56, 58 führen in etwa ausgehend von der Längsachse des Hohlkörpers 26a radial nach außen an die Umfangsseite des Hohlkörpers 26a. Die Führungsrille 62 weist im Bereich der Längsachse des Hohlkörpers 26a einen größeren Abstand vom Hohlkörper 26a auf als am Umfang des Hohlkörpers 26a, wobei zwischen der ersten schiefen Ebene 56 und der zweiten schiefen Ebene 58 ein Sprungabschnitt 64 vorgesehen ist.

Unterhalb des Sprungabschnitts 64 bzw. am oberen Ende der zweiten schiefen Ebene 58 befindet sich ein Auslöse-/Blockiermechanismus 66.

Der Auslöse-/Blockiermechanismus 66 hat die Aufgabe den Hydrostempel 40 während der Drehbewegung des Rotationselements16 in einer festen Position zu halten.

Im oberen Abschnitt der zweiten schiefen Ebene 58, unterhalb des Auslöse-/Blockiermechanismus 66 ist eine Sperrklinke 68 vorgesehen.

Weiterhin umfasst die Auslenkvorrichtung 28a eine Hubstange 70, die mit einer Mitnehmerklammer 72 ausgestattet ist.

Wenn die Ausführungen auch nur in Bezug auf den Hohlkörper 26a dargestellt sind, gelten diese auch für den Hohlkörper 26b.

Zur Funktion der Auslenkvorrichtung 28a bzw. 28b:
Sobald die Antriebsvorrichtung in einer Zwischenposition ist, in der der untere Hohlkörper 26b mit Fluid gefüllt ist, bewegt sich die obere Walze 60, d.h. die Walze auf dem oberen Hohlkörper 26a, auf der ersten schiefen Ebene 56 aus der Ruheposition 74 heraus und rollt in eine erste Zwischenposition 76, in der der Auslöse-/Blockiermechanismus 66 ausgelöst wird.

Das Öffnen des Auslöse-/Blockiermechanismus 66 bewirkt die Freigabe des Hydrostempels 40, so dass der Hydrostempel 40 aufgrund der Schwerkraft bzw. Gewichtskraft nach unten wirkt und im unteren Hohlkörper 26b aufgrund seiner Masse das Fluid verdrängen kann, so dass das Fluid über die Rohrleitung 34 in den oberen Hohlkörper 26a gelangt. Die obere Walze 60 rollt mit dem Öffnen des Auslöse-/Blockiermechanismus 66 in eine zweite Zwischenposition 78, in der sie von der Sperrklinke 68 gehalten wird.

Hat sich der Hydrostempel 40 aufgrund der Schwerkraft weitgehend nach unten bewegt und das Fluid aus dem unteren Hohlkörper 26b in den oberen Hohlkörper 26a verdrängt, wirkt der Hydrostempel 40 auf die untere Mitnehmerklammer 72 der Hubstange 70, d.h. auf die Mitnehmerklammer des unteren Hohlkörpers 26b, und zieht die Hubstange 70 nach unten, so dass die Hubstange 70 die obere Sperrklinke 68 herunterzieht und auslöst.

Während die Hubstange 70 in dem oberen Hohlkörper 26a die Sperrklinke 68 löst, wird in analoger Weise im unteren Hohlkörper 26b die entsprechende Sperrklinke wieder in ihre geschlossene Position, die ihrer Ausgangsposition entspricht, überführt.

Sobald die Sperrklinke 68 ausgelöst ist, rollt die Walze 60 am oberen Hohlkörper 26a in ihre äußere Auslenkposition 80.

Das Rotationselement 16 wird dadurch aus seiner Gleichgewichtsposition herausgeführt und führt eine Drehbewegung durch, während der die Walze 60 des Hohlkörpers 26a sich in ihrer Auslenkposition 80 befindet.

Während der Drehbewegung kann ein Teil der potentiellen Energie zum Antreiben von Stromgeneratoren oder Antriebsmaschinen, beispielsweise Pumpen, genutzt werden.

Befindet sich der Hohlkörper 26a nach erfolgter 180° Drehbewegung in seiner unteren Position, bewirkt die Schwerkraft, dass die Walze 60 aufgrund ihres Eigengewichts entlang der Führungsrille 62 in ihre Ruheposition 74 zurückgeführt wird.

Die Walze 60 verbleibt in der Ruheposition 74 so lange, bis durch die funktionsrichtige 180°-Drehbewegung des Rotationselements 16 der Hohlkörper 26a wieder in der oberen Position steht.

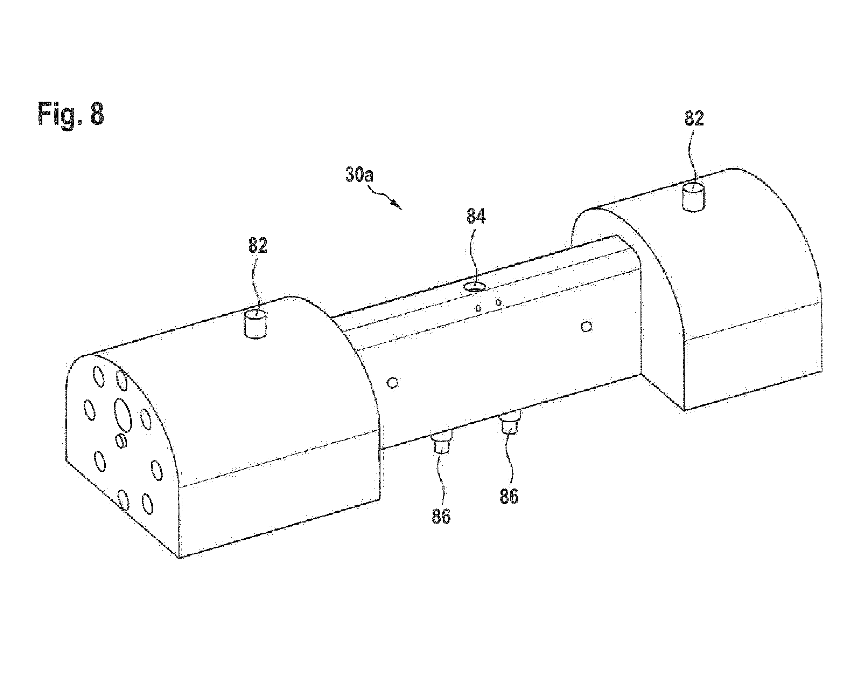

Figur 8 zeigt eine Steuervorrichtung 30a eines Hohlkörpers 26a zum Arretieren und Lösen des Rotationselements 16 im Detail. Die Steuerungsvorrichtung 30a ist an ihrer Unterseite mit der Außenseite des Hohlkörpers 26a verbunden.

Sie weist entsprechende Rastelemente 82 auf, die mit den Rastelementen 32 am Gerüst 12 wechselwirken. Weiterhin ist eine gleitdichtende Hubstangenführung 84 für die Hubstange 70 vorgesehen sowie gleitdichtende Steuerbolzen 86, die mittels der Rohrleitung 34 betätigt werden.

Das Gehäuse der Steuervorrichtung 30a dient der gleitdichten und verdrehungsfreien (torsionsfreien) Führung der Hubstange 70.

Darüber hinaus umfasst die Steuervorrichtung 30 ein Drehscheibenventil 88 mit unsymmetrischer Gewichtsverteilung, welches mit dem Fluidsystem in Verbindung steht und die Druckverhältnisse in dem Hohlkörper 26a regelt, insbesondere für die Be- und Entlüftung des Hohlkörpers 26a sorgt.

Wenn auch nicht dargestellt, so sind bei den Hohlkörpern 26a, 26b Öffnungen für die Belüftung und für das Befüllen mit dem Fluid vorgesehen. Weitere Öffnungen zum Ausgleich der Druckverhältnisse innerhalb der fluidfreien Bereiche der Hohlkörper können ebenfalls vorgesehen sein und gegebenenfalls zum Steuern des Hydrostempels dienen.

Die Ausführungen im Zusammenhang mit der Steuervorrichtung 30a gelten auch für die Steuervorrichtung 30b.

Die Antriebsvorrichtung 10 funktioniert wie folgt:
Im Grundzustand befindet sich das Rotationselement 16 in vertikaler Position in einer Gleichgewichtsstellung. Der obere Hohlkörper 26a ist mit Fluid gefüllt. Das Fluid befindet sich im Hohlkörper 26a oberhalb des Verdrängungskörpers 36a.

Der abgesenkte Hydrostempel 40 wurde mittels der Auslösevorrichtung 28a und der Steuervorrichtung 30b eingerastet und die Verrastung zum Gerüst 12 geöffnet.

In diesem Grundzustand rollt die Walze 60 in ihre Auslenkposition 80, so dass das Gewicht der Auslenkvorrichtung 28a auf dem Hohlkörper 26a nicht mehr im Schwerpunkt, d.h. auf die Längsachse des Hohlkörpers 26a wirkt und das Rotationselement 16 aus seiner Gleichgewichtsposition gebracht wird.

Dies führt zu einer Rotation des Rotationselements 16 um etwa 180°. Die an dem Gerüst 12 drehbar gelagerte Welle 14 wird bei dieser Drehbewegung mitgedreht und kann wenigstens eine nicht dargestellte Maschine oder wenigstens einen nicht dargestellten Generator antreiben.

Das sich drehende Rotationselement 16 wird mittels der Brems- und/oder Stoppvorrichtung in der Zwischenposition gegebenenfalls abgebremst und gestoppt. In dieser Zwischenposition befindet sich der mit Fluid gefüllte Hohlkörper 26a in einer unteren Position und der Hohlkörper 26b ohne Fluid in der oberen Position.

In dieser Stellung rollt die Walze 60 in der Auslenkvorrichtung 28a des unteren Hohlkörpers 26a wieder ungehindert in ihre Ruheposition 74 zurück.

Aufgrund des Gewichts des freigegebenen Hydrostempels 40 wird das Fluid, das sich nun im unteren Hohlkörper 26a unterhalb des Verdrängungskörper 36a befindet, durch die Rohrleitung 34 in den oberen Hohlkörper 26b gedrückt und füllt den Hohlraum oberhalb des Verdrängungskörper 36b im oberen Hohlkörper 26b.

Sobald sich eine vorgegebene Menge an Fluid im oberen Hohlkörper 26b befindet, bewirkt die Verschiebung des Hydrostempels 40 während des Verdrängens des Fluids aus dem unteren Hohlkörper 26b wiederum, dass in dem oberen Hohlkörper 26b die Sperrklinke 68 ausgelöst wird und die obere Walze 60 entlang der zweiten schiefen Ebene 58 hinunterläuft, um auf dem oberen Hohlkörper 26b ein Ungleichgewicht zu erzeugen, was wiederum eine Schwenkbewegung des Rotationselements 16 bewirkt.

Es versteht sich, dass eine Schwenkbewegung erst möglich ist, wenn sich im oberen Hohlkörper 26b eine größere Menge an Fluid befindet als im unteren Hohlkörper 26a. Vorzugsweise wird das Fluid im unteren Hohlkörper 26b im Wesentlichen vollständig in den oberen Hohlkörper 26a und die Rohrleitung 34 verdrängt, um eine Schwenkbewegung mit im Wesentlichen gleichem Drehmoment wie bei der ersten Schwenkbewegung durchzuführen.

Ob das Fluid im unteren Hohlkörper 26b vollständig verdrängbar ist, ist eine Frage der Auslegung der Antriebsvorrichtung und unter anderem abhängig von der Masse, der Geometrie und der Länge des Hydrostempels 40 sowie der Fluidmenge.

Der Vorgang des Verdrängens des Fluids aus dem unteren Hohlkörper 26b bedarf einer gewissen Zeit, so dass die Vorrichtung in zeitlichen Abständen eine Schwenkbewegung bereitstellt.

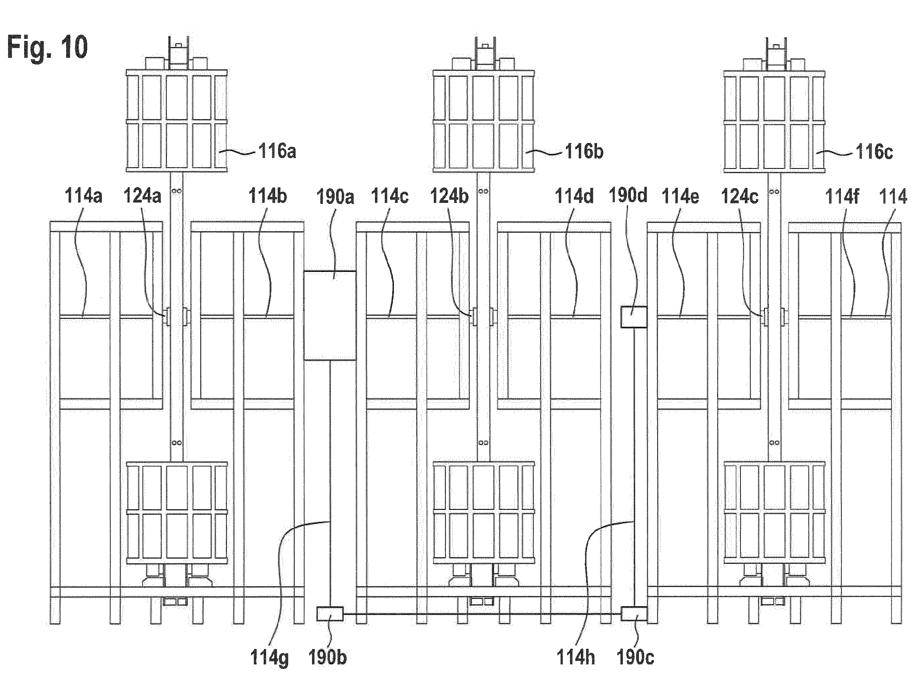

Eine im Wesentlichen gleichmäßige Drehbewegung der Welle 14 ist mittels einer Vielzahl von Antriebsvorrichtungen 10 bereitstellbar. Eine solche Vorrichtung ist in Figur 10 dargestellt.

Bei der in Figur 10 dargestellten Ausführungsform einer Antriebsvorrichtung mit einer Vielzahl von Rotationselementen 116a, 116b, 116c ist jedes Rotationselement mittels einer lösbaren Kupplung 124a, 124b, 124c mit der Welle 114 verbunden. Die einzelnen Rotationselemente 116a, 116b, 116c sind über eine Vielzahl von Achs- bzw. Wellenabschnitten 114a, 114b, 114c, 114d, 114e, 114f, 114g, 114h und Getriebeverbindungen 190a, 190b, 190c, 190d miteinander verbunden.

Mittels der lösbaren Kupplung 124a, 124b, 124c kann die Kraftabnahme bzw. der Freilauf eines oder mehrerer Rotationselemente 116a, 116b, 116c entlang der Welle 114 gesteuert werden.

Die einzelnen Rotationselemente 116a, 116b, 116c werden somit nur bei ihrer Drehung mittels der Kupplung 124a, 124b, 124c mit der Welle 114 gekoppelt. So können in der Zeit, in der das Fluid von dem unteren Behälter in den jeweiligen oberen Behälter verdrängt wird, weitere Rotationselemente nacheinander mit der Welle gekoppelt und geschwenkt werden, so dass die Welle 114 gedreht wird.

Somit ist bei einer entsprechenden Anzahl von Rotationselementen ein quasi kontinuierlicher Antrieb von Arbeitsmaschinen oder Generatoren möglich.

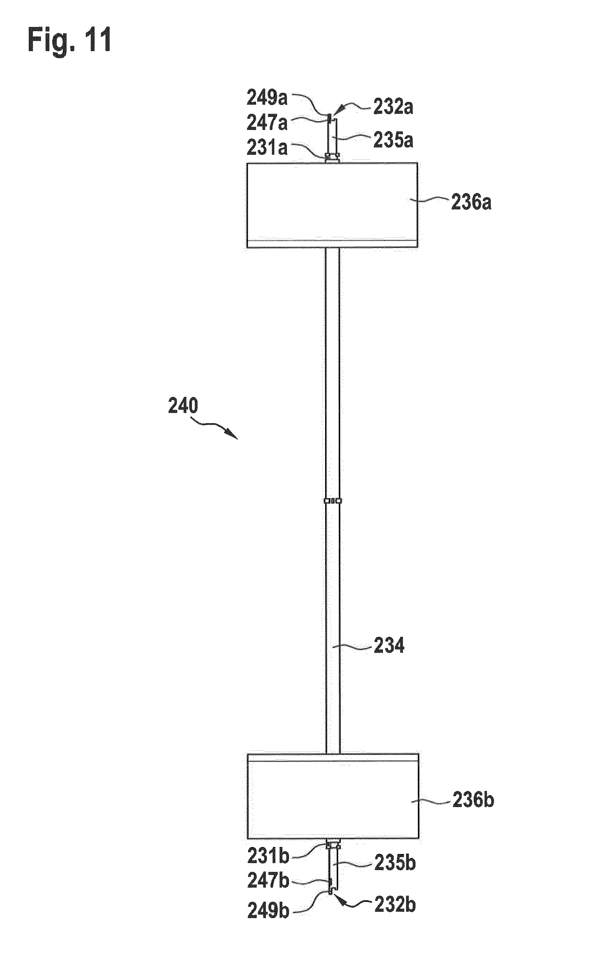

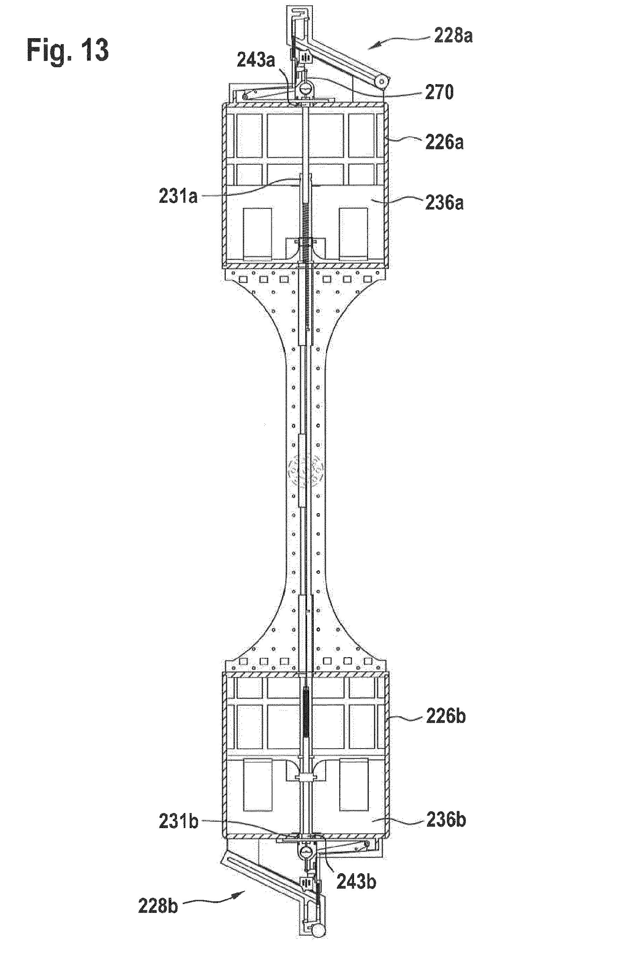

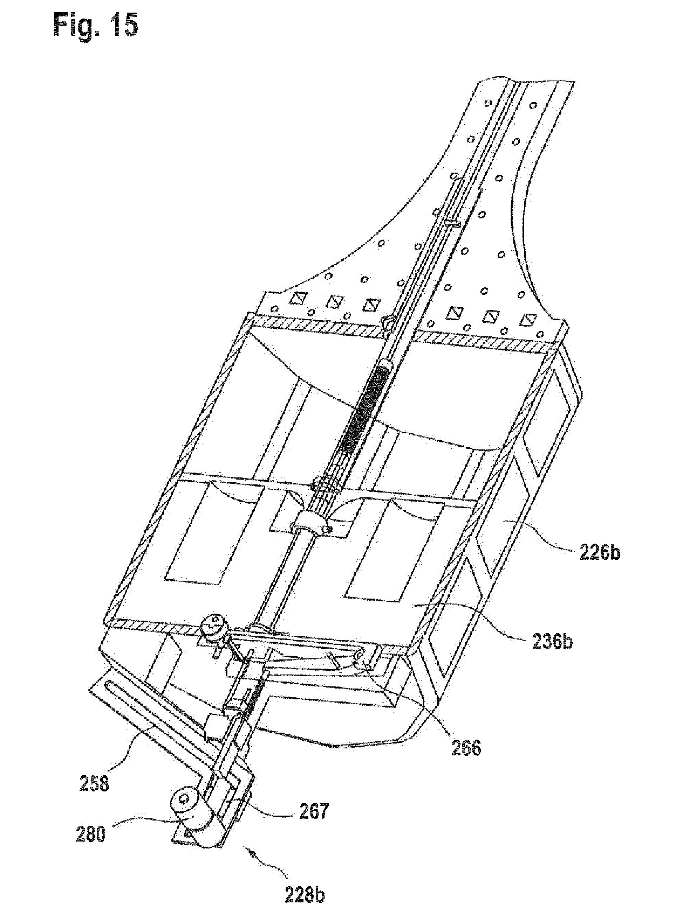

Die Figuren 11 bis 17 zeigen eine zweite Ausführungsform einer Antriebsvorrichtung.

Die in den Figuren 11 bis 17 dargestellte zweite Ausführungsform unterscheidet sich von der ersten Ausführungsform im Wesentlichen im Hydrostempel und in der Auslösevorrichtung.

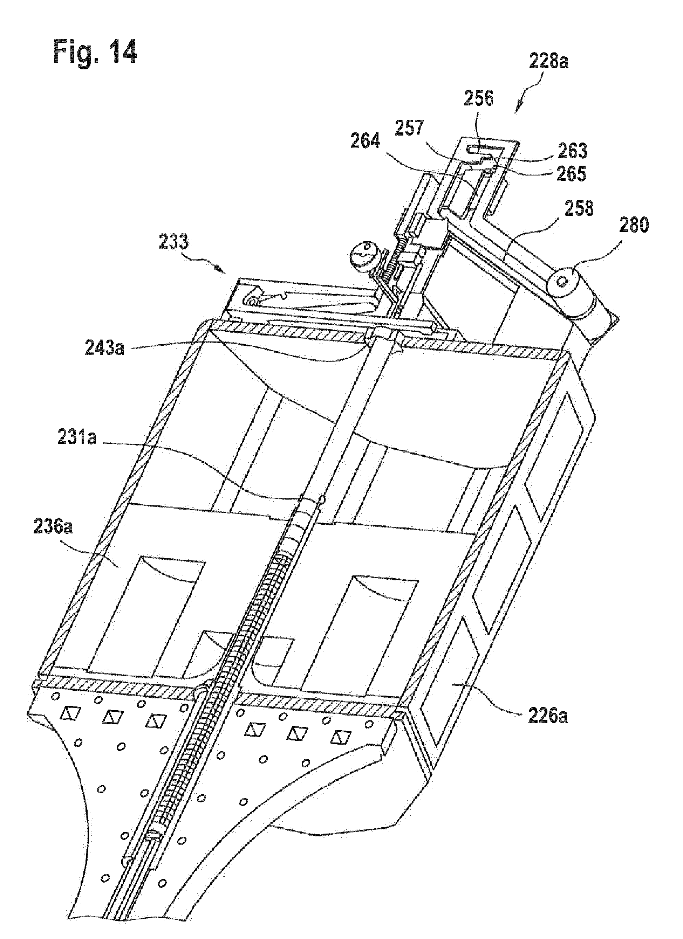

Figur 11 zeigt einen Hydrostempel 240 gemäß einer zweiten Ausführungsform. Der Hydrostempel 240 umfasst zwei Verdrängungskörper 236a, 236b und eine starre Rohrleitung 234, wobei die beiden Verdrängungskörper 236a, 236b jeweils an den Endabschnitten der Rohrleitung 234 angeordnet und mit dieser verbunden sind. Die Rohrleitung 234 ragt geringfügig aus dem Verdrängungskörper 236a, 236b heraus. An dem freien Ende der starren Rohrleitung 234 ist eine ringförmige Aufnahme 231 a, 231 b um die Rohrleitung 234 vorgesehen, die eine Halterung des Hydrostempels 240 des in den Figuren 14 bis 17 dargestellten Auslöse- und Blockiermechanismus 266 bildet. Darüber hinaus sind federnd gelagerte Gleitrohre 235a, 235b an den Endabschnitten der Rohrleitung 234 verschiebbar vorgesehen. Der innere Querschnitt der starren Rohrleitung 234 kann entlang seiner Gesamtlänge konstant bleiben oder variieren.

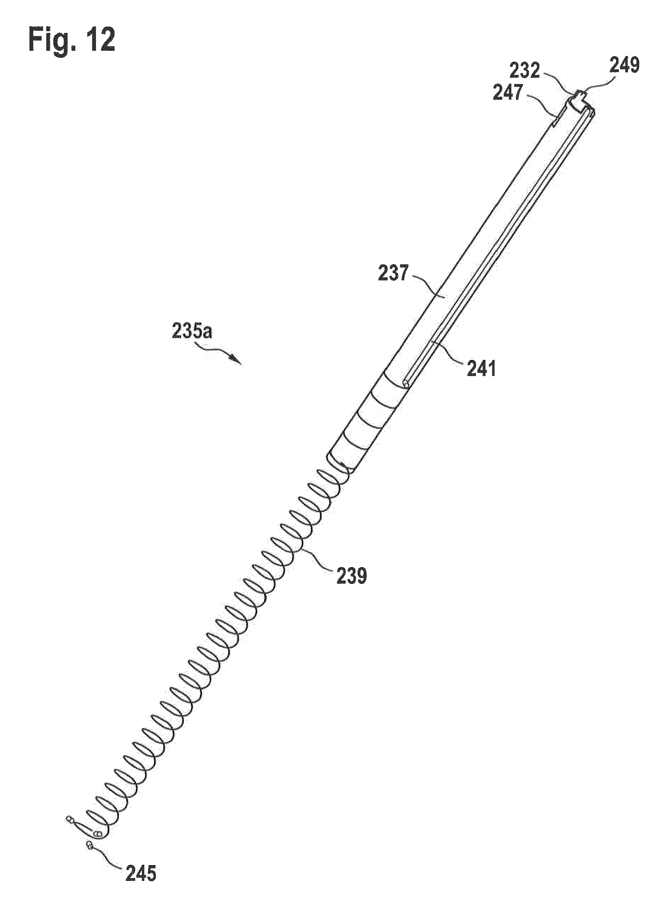

Wie in Figur 12 beispielhaft an dem Gleitrohr 235a dargestellt, umfassen die Gleitrohre 235a, 235b einen Gleitrohrabschnitt 237, ein Federelement 239, das an einem Ende des Gleitrohrabschnitts 237 angeordnet ist, sowie ein Gegenlager 245 zum Abstützen der Gleitrohre 235 innerhalb der Rohrleitung 234. In dem Rohrabschnitt 237 ist eine Längsnut 241 vorgesehen. Das dem Federelement 239 entgegengesetzt liegende Ende des Gleitrohrabschnitts 237 weist eine Öffnung auf und bildet eine Mündung 232 für das Fluid, wobei seitliche Öffnungen 247 und/oder Stege 249 im Mündungsbereich 232 des Gleitrohrs vorgesehen sein können.
7
Die Gleitrohre 235a, 235b sind zumindest abschnittsweise teleskopartig in der Rohrleitung 234 führbar (siehe Figuren 14 bis 16). Zur Vermeidung von Torsion ist in der Rohrleitung 234 eine Aufnahme vorgesehen, die in die Längsnut 241 des Gleitrohrabschnitts 237 greift.

Bei einer nicht dargestellten Ausführungsform kann eine Vielzahl von Längsnuten in dem Gleitrohrabschnitt vorgesehen sein, die in eine Vielzahl von Aufnahmen in der Rohrleitung 234 eingreifen.

Das Gegenlager 245 ist so ausgebildet, dass der Querschnitt des Rohrabschnitts 237 möglichst nicht verengt wird. Hierzu können beispielsweise von außen geschraubte, geschweißte oder gestiftete Ringeinsätze vorgesehen sein. Alternativ ist auch ein Sicherungs- Federring einsetzbar

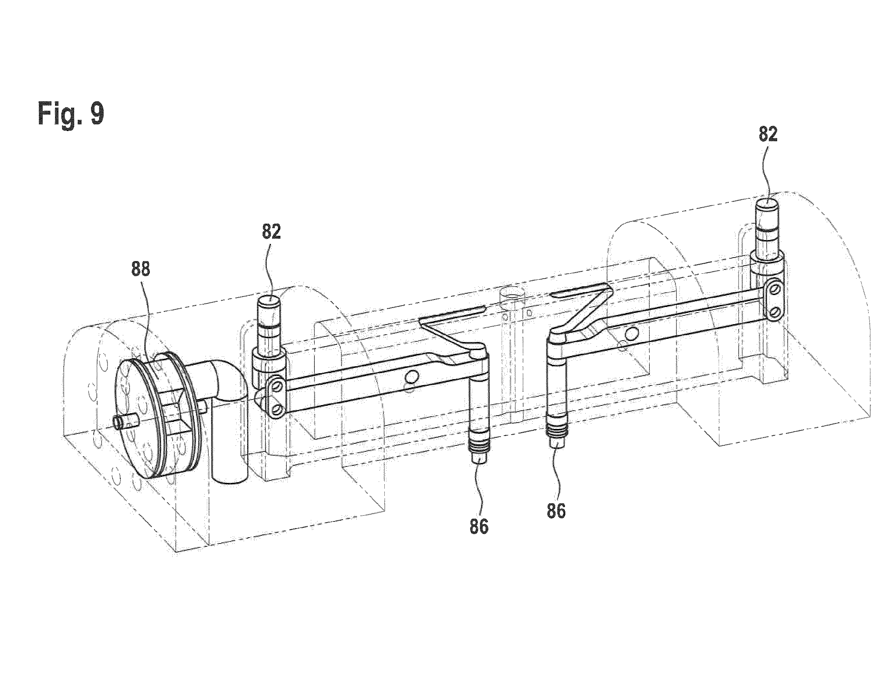

An der Oberseite jedes Hohlkörpers 226a, 226b ist eine in axialer Verlängerung der Rohrleitung 234 kammerartige Ausbuchtung 243a, 243b vorgesehen, die ausgelegt ist, das entsprechende freie Ende bzw. die Mündung 232 eines Gleitrohres 235a, 235b und einen oberen Abschnitt der Rohrleitung 234 mit der ringförmigen Aufnahmen 231 a, 231 b aufzunehmen. Der größte Querschnitt der kammerartigen Ausbuchtung 243a, 243b ist größer als der Querschnitt der Rohrleitung 234 mit der ringförmigen Aufnahme 231 a, 231 b. Es hat sich als Vorteil erwiesen, dass die kammerartigen Ausbuchtungen 243a, 243b direkt mit dem Belüftungssystem wie etwa den in Fig. 9 dargestellten Drehventilen 88 verbunden sind.

Die Figuren 14 bis 17 zeigen eine Auslenkvorrichtung 228a bzw. 228b auf dem Hohlkörper 226a bzw. 226b im Detail. Jede Auslenkvorrichtung 228a, 228b weist drei hintereinander liegende schiefe Ebenen 256, 257, 258 auf, auf der eine Walze 280 entlanggleitet bzw. -rollt, wobei zwischen der ersten schiefen Ebene 256 und der zweiten schiefen Ebene 257 ein erster Sprungabschnitt 263 und zwischen der zweiten schiefen Ebene 257 und der dritten schiefen Ebene 258 ein zweiter Sprungabschnitt 264 vorgesehen sind. Im Bereich des ersten Sprungabschnitts 263 ist eine gefederte Klappe 265 vorgesehen, deren Oberseite einen Teil der zweiten schiefen Ebene 257 bildet.

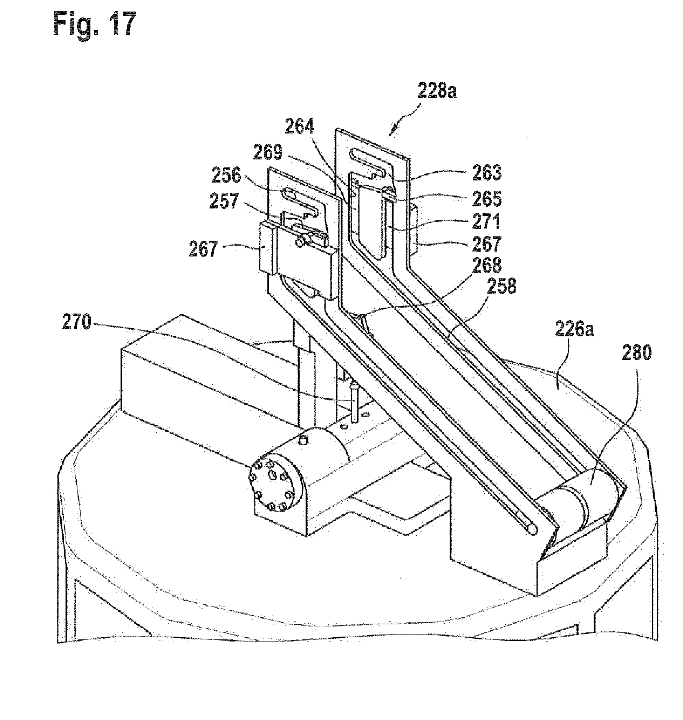

Wie am besten in Figur 17 zu erkennen ist, sind im Bereich des zweiten Sprungabschnitts ein Führungselementepaar 267 mit zwei Führungsrinnen 269 und 271 für die Walze 280 vorgesehen.

Auf der dritten schiefen Ebene 258 ist eine Klinke 268 angeordnet.

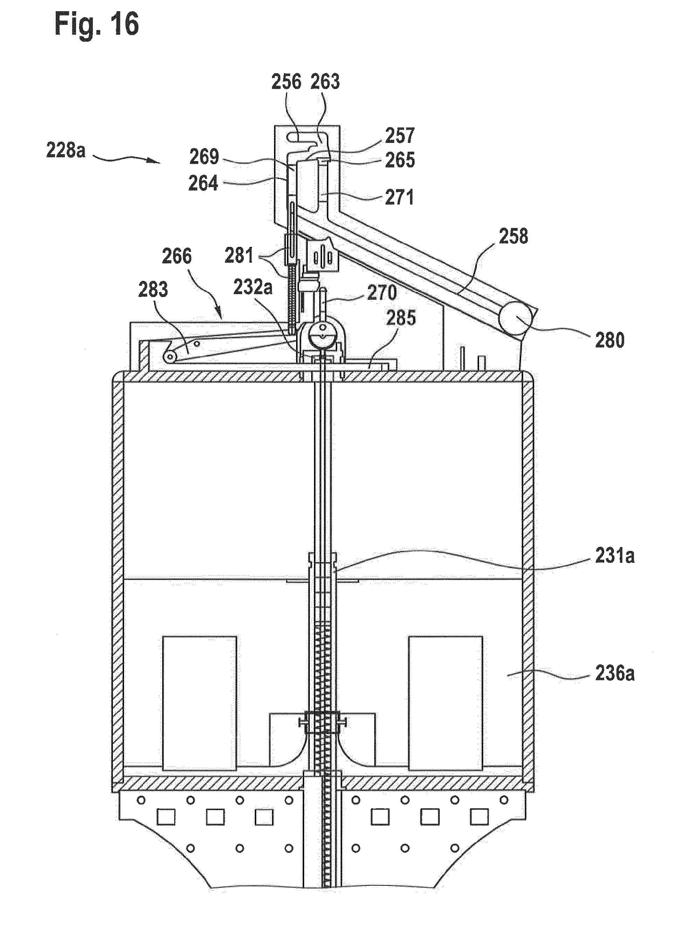

Der Auslöse-/Blockiermechanismus 266 umfasst weiter eine federnd gelagerte Schubstange 281, welche auf eine federnd gelagerte Hebelvorrichtung 283 wirkt, die hierdurch zwei federnd gelagerte Schubstücke 285 aus der ringförmigen Aufnahme 231 a schieben und damit den Hydrostempel 240 freigeben (siehe Figur 16).

Die Funktionsweise der in den Figuren 11 bis 17 dargestellten Ausführungsform einer Antriebsvorrichtung unterscheidet sich im Wesentlichen von der Funktionsweise der Antriebsvorrichtung 10 dadurch, dass bei der in den Figuren 11 bis 17 dargestellten Ausführungsform einer Antriebsvorrichtung das Fluid, das von dem unteren Hohlkörper mittels des Hydrostempels in den oberen Hohlkörper verdrängt wird, durch das Gleitrohr von oben auf den bereits vorhandenen Fluidspiegel gelangt und zusätzlich zur Masse des Hydrostempels eine Gewichtskraft auf das Fluid im unteren Hohlkörper ausübt.

Dies hat den Vorteil, dass in dem Fall, in dem das Fluid, vom unteren Hohlkörper in den oberen Hohlkörper verdrängt wird, das Fluid im unteren Hohlkörper nicht direkt mit dem Fluid in dem oberen Hohlkörper verbunden ist.

Im Detail befindet sich im Zwischenzustand, in dem sich das Fluid in dem unteren Hohlkörper 226b befindet, das Gleitrohr 235a im oberen Hohlkörper 226a in einem im Wesentlichen eingefahrenen Zustand und das Gleitrohr 235b im unteren Hohlkörper 226b in einem im Wesentlichen ausgefahrenen Zustand. Während der Hydrostempel 240 aufgrund der Schwerkraft nach unten gedrückt wird, wird das Gleitrohr 235b im unteren Hohlkörper 226b in die Rohrleitung 234 verschoben, so dass der untere Verdrängungskörper 226b des Hydrostempels 240 im Wesentlichen vollständig an den Boden des Hohlkörpers 226b gelangt.

Mit zunehmendem Fluidspiegel in dem oberen Hohlkörper 226a bewegt sich das Gleitrohr 235a aus der Rohrleitung 234, wobei die Mündung des Gleitrohrs 235a aufgrund einer Federkraft oder der Schwimmfähigkeit des Gleitrohrs 235a zu jeder Zeit über den Fluidspiegel im oberen Hohlkörper 226a hinausragt.

Die kammerartige Ausbuchtung 243a, 243b ist bei einer nicht dargestellten Ausführungsform nicht notwendig, wenn die Fluidmenge so gewählt ist, dass sie nicht vollständig den Hohlraum im Hohlkörper ausfüllt.

Da sich der Aufbau der Auslenkvorrichtung 228a, 228b der zweiten Ausführungsform von der Auslenkvorrichtung 28 der ersten Ausführungsform unterscheidet, ergibt sich eine abgewandelte Funktionsweise:
In der Zwischenposition der Antriebsvorrichtung rollt die Walze 280 aus ihrer Grundposition über die schiefe Ebene 256 ab und trifft nachdem sie den ersten Sprungabschnitt 263 passiert hat, auf die Klappe 265. Auf der Klappe 265 läuft die Walze 280 die zweite schiefe Ebene 257 entlang, gelangt in die erste Führungsrinne 269 und drückt, nachdem die Walze 280 den zweiten Sprungabschnitt 264 passiert hat, auf die federnd gelagerte Schubstange 281. Hierbei wird der Auslöse-/Blockiermechanismus 266 betätigt und der Hydrostempel 240, der aufgrund der ringförmigen Aufnahme 231 a in dem Auslöse-/Blockiermechanismus 266 gehalten wird, wird freigegeben. Mittels der Klinke 268a in der dritten schiefen Ebene 258 wird die Walze 280 so lange gehalten, bis der Hydrostempel 240 seine Abwärtsbewegung weitestgehend beendet hat. Die Schaltstange 270 öffnet die Klinke 268a und gibt die Walze 280 frei, so dass die Walze 280 entlang der dritten schiefen Ebene 258 in die äußere Auslenkposition gelangen kann. Gleichzeitig wird die untere Klinke im unteren Hohlkörper geschlossen und somit in ihre Ausgangsposition überführt. Sobald sich die Walze 280 in ihrer äußeren Auslenkposition befindet, wird der Schwenkvorgang des Rotationselements eingeleitet.

Befindet sich die Walze 280 nach dem Schwenkvorgang in der unteren Position, d.h. an dem Hohlkörper, der nach dem Schwenkvorgang unten ist, rollt die Walze 280 in der Auslenkvorrichtung entlang der dritten schiefen Ebene 258 in den ersten Sprungabschnitt 263 mittels der zweiten Führungsrinne 271 zur ersten schiefen Ebene 256, um in die Ausgangsposition der Walze 280 zu gelangen. Hierbei wird die Klappe 265 aufgrund der Gewichtskraft der Walze 280 geöffnet.

Wenn auch nicht dargestellt so kann der Boden des Hohlkörpers von äußeren Rand zum Zentrum des Bodens konisch verlaufen.

Bei einer nicht dargestellten Weiterbildung können die Gleitrohre aus einem für das verwendete Fluid schwimmfähigen Material bestehen und/oder mit Schwimmern, die vorzugsweise im Mündungsbereich der Gleitrohre angeordnet sind, versehen sein. Dies hat den Vorteil, dass die Gleitrohre aufgrund des Auftriebs in dem Fluid in die gewünschte Positionen gelangen können und auf Federn und dergleichen zum Ausrichten der Gleitrohre weitestgehend verzichtet werden kann.

Darüber hinaus ist durch die Verwendung von auftreibbaren oder schwimmenden Gleitrohren die Steighöhe des Fluids durch den Hydrostempel im Vergleich zu nicht auftreibbaren oder schwimmenden Gleitrohren an den vorhandenen Fluidspiegel anpassbar. Das Gleitrohr steigt mit steigendem Fluidspiegel im oberen Hohlkörper nach oben, so dass der Mündungsbereich des Gleitrohrs jederzeit aus dem Fluid herausragt. Hierbei kann die Steighöhe des Fluids so gering wie notwendig gehalten werden.

Wenn auch nicht dargestellt, so können die Innenbereiche des Steigrohrs und/oder der Gleitrohre des Hydrostempels speziell geformt und/oder mit Funktionselementen wie etwa Filter versehen sein, was zu einem weitestgehend laminaren Fluidfluss führt und somit die Steighöhe des Fluids in dem Hydrostempel positiv beeinflusst.

Bei den dargestellten und beschriebenen Ausführungsformen ist vorgesehen, dass die Betätigung der Brems- und/oder Stoppvorrichtung, Auslenkvorrichtung, Belüftungsvorrichtung, Befüllungsvorrichtung und des Auslöse-/Blockiermechanismus mechanisch erfolgt. Die Betätigung wenigstens einer der Vorrichtungen wie etwa Brems- und/oder Stoppvorrichtung, Auslenkvorrichtung, Belüftungsvorrichtung, Befüllungsvorrichtung, Auslöse-/Blockiermechanismus kann gemäß nicht dargestellter Ausführungsformen elektronisch, magnetisch, hydraulisch, pneumatisch, mittels einer Kombination oder mittels einer Kombination mit mechanischen Mitteln erfolgen.

Der beschriebene Zustand der Antriebsvorrichtungen stellt den Idealzustand dar. Aufgrund verschiedener Effekte wie etwa Reibungseffekte, Leckagen, durch die Fluid verloren geht, Verschmutzung des Fluids aufgrund von Abrieb nimmt die Leistung der Vorrichtung während der Betriebsdauer ab. Insbesondere reduzieren sich das Drehmoment und/oder die Drehzahl während der Betriebsdauer, bis schließlich die Vorrichtung nach einer bestimmten Anzahl von Drehzyklen stehen bleibt. Die Anzahl der Drehzyklen ist von der Auslegung und Präzision der Vorrichtung abhängig.

Wenn die Vorrichtung beispielsweise aufgrund von Leckagen im Fluidsystem zum Stillstand gekommen ist, wird Fluid durch die im Hohlkörper vorgesehenen Öffnungen nachgefüllt und die Vorrichtung wieder in den Grundzustand überführt.

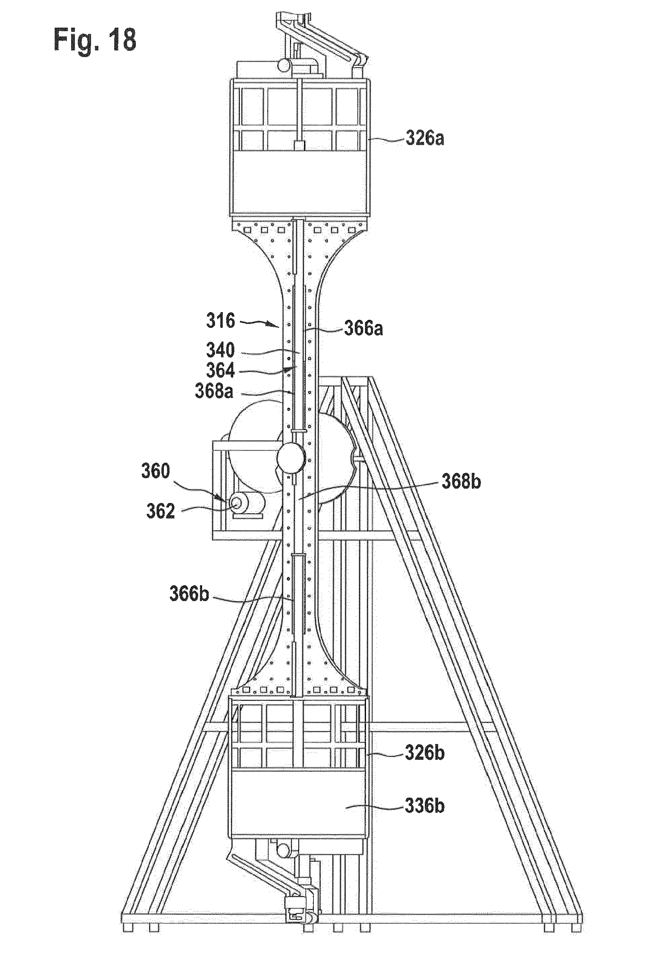

Bei einer in Fig. 18 dargestellten dritten Ausführungsform einer Antriebsvorrichtung ist eine Druckerzeugungsvorrichtung 360 mit einem Druckbehälter 362 und einem Kolbensystem 364 vorgesehen, welches auf den Hydrostempel 340 wirkt.

Das Kolbensystem 364 umfasst zwei Paare von Druckkolben 366a, 366b und Druckzylindern 368a, 368b und zwei Steuerventile. Die Steuerventile sind im Bereich der Drehachse des Rotationselements 316 an dem Rotationselement 316 angeordnet. Die zwei Paare von Druckkolben 366a, 366b und Druckzylinder 368a, 368b sind an dem Rotationselement 316 befestigt und erstrecken sich von der Drehachse des Rotationselements entlang des Rotationselements 316 nach außen in Richtung der Hohlkörper 326a, 326b, so dass sich auf beiden Hebelarmen des Rotationselements 316 jeweils ein Paar Druckkolben 366a, 366b und ein Paar Druckzylinder 368a, 368b befindet.

Die beiden Steuerventile schalten die beiden Druckkolbenpaare 366a, 366b so, dass in dem Zustand, in dem der Hydrostempel 340 auf das Fluid im unteren Hohlkörper 326b wirkt, zusätzlicher Druck auf den Hydrostempel 340, insbesondere Verdrängungskörper 336b ausgeübt wird, um das Fluid in dem unteren Hohlkörper 326b in den oberen Hohlkörper 326a zu verdrängen.

Mit Hilfe der Druckerzeugungsvorrichtung 360 ist sichergestellt, dass das Fluid über die vorgesehene Steighöhe, weitgehend vollständig von dem unteren Hohlkörper 326b in den oberen Hohlkörper 326a verdrängt wird.

Darüber hinaus kann das Fluid mit Hilfe der Druckerzeugungsvorrichtung 360 schneller vollständig von dem unteren Hohlkörper 326b in den oberen Hohlkörper 326a verdrängt werden als ohne Druckerzeugungsvorrichtung 360, so dass die Antriebsvorrichtung schneller in den Grundzustand gelangt.

Die Druckerzeugungsvorrichtung 360 kann wie dargestellt hydraulisch betrieben werden. Alternativ kann eine elektrisch, magnetisch, pneumatisch oder mechanisch betriebene Druckerzeugungsvorrichtung vorgesehen sein.

Die Druckerzeugungsvorrichtung kann beispielsweise eine Pumpenvorrichtung, Pneumatikzylinder und/oder Gewichtsplatten umfassen.

Wenn in der in Fig. 18 dargestellten Ausführungsform zwei Paare von Druckkolben 366a, 366b und Druckzylindern 368a, 368b gezeigt sind, so können bei nicht dargestellten Ausführungsformen an jedem Hebelarm des Rotationselements ein oder mehr als zwei Druckkolben und Druckzylinder vorgesehen sein.

Darüber hinaus kann bei einer nicht dargestellten Ausführungsform der Hydrostempel selbst ein hydraulisches oder pneumatisches Kolbensystem umfassen.

## Patentansprüche

1. Antriebsvorrichtung, umfassend ein Gerüst (12) mit einer drehbar gelagerten, horizontalen Antriebswelle (14; 114), ein als zweiseitiger Hebel (20) ausgebildetes Rotationselement (16; 116a, 116b, 116c; 316)
mit einer Stangenkonstruktion (18) und
zwei Hohlkörpern (26a, 26b; 226a, 226b; 326a, 326b), die jeweils an den äußeren Enden der Stangenkonstruktion (18) angeordnet und befestigt sind, wobei die Antriebswelle (14; 114) die Drehachse des Rotationselements (16; 116a, 116b, 116c; 316) bildet und die Stangenkonstruktion (18) in zwei Hebelarme (22a, 22b) unterteilt,
und eine Fluidvorrichtung mit
einer Rohrleitung (34; 234), die entlang der Längsachse der Stangenkonstruktion (18) angeordnet ist und an ihren beiden Endabschnitten jeweils in einen der beiden Hohlkörper (26a, 26b; 226a, 226b; 326a, 326b) mündet, wobei die beiden Hohlkörper (26a, 26b; 226a, 226b; 326a, 326b) und die Rohrleitung (34; 234) ein im Wesentlichen geschlossenes System für ein Fluid ausbilden,
zwei stempelartigen Verdrängungskörpern (36a, 36b; 236a, 236b; 336b), die jeweils in einem Hohlkörper (26a, 26b; 226a, 226b; 326a, 326b) in Axialrichtung des Hohlkörpers (26a, 26b; 226a, 226b; 326a, 326b) verschiebbar gelagert sind, wobei das Volumen des Verdrängungskörpers (36a, 36b; 236a, 236b; 336b) kleiner als das Innenvolumen des Hohlkörpers (26a, 26b; 226a, 226b; 326a, 326b) ist.

2. Antriebsvorrichtung nach Anspruch 1, **dadurch gekennzeichnet, dass** die beiden Verdrängungskörper (36a, 36b; 236a, 236b; 326b) und die Rohrleitung (34; 234) starr miteinander verbunden sind und einen Hydrostempel (40; 240; 340) ausbilden und der Hydrostempel (40; 240; 340) verschiebbar in dem Rotationselement (16; 116a, 116b, 116c; 316) gelagert ist.

3. Antriebsvorrichtung nach Anspruch 1 oder 2, **dadurch gekennzeichnet, dass** an beiden Endabschnitten der Rohrleitung (234) Gleitrohre (235), vorzugsweise federnd gelagerte und/oder schwimmfähige Gleitrohre vorgesehen sind.

4. Antriebsvorrichtung nach Anspruch 3, **dadurch gekennzeichnet, dass** das Gleitrohr (235) wenigstens eine Längsnut (241) und/oder an seinem freien Ende einen Mündungsbereich (232) mit Öffnungen aufweist.

5. Antriebsvorrichtung nach einem der vorhergehenden Ansprüche, **dadurch gekennzeichnet, dass** die Fluidmenge so bemessen ist, dass, wenn in jedem Hohlkörper (26a, 26b; 226a, 226b; 326a, 326b) die Verdrängungskörper (36a, 36b; 236a, 236b; 336b) angeordnet sind, einer der beiden Hohlkörper (26a, 26b; 226a, 226b; 326a, 326b) und die Rohrleitung (34, 234) vollständig mit dem Fluid gefüllt sind und der andere der beiden Hohlkörper (26a, 26b; 226a, 226b; 326a, 326b) kein Fluid enthält.

6. Antriebsvorrichtung nach einem der vorhergehenden Ansprüche, **dadurch gekennzeichnet, dass** eine Brems- und/oder Stoppvorrichtung für das Rotationselement (16; 116a, 116b, 116c; 316) vorgesehen ist.

7. Antriebsvorrichtung nach einem der vorhergehenden Ansprüche, **dadurch gekennzeichnet, dass** eine Auslenkvorrichtung (28a, 28b; 228a, 228b) vorgesehen ist.

8. Antriebsvorrichtung nach Anspruch 7, **dadurch gekennzeichnet, dass** die Auslenkvorrichtung (28a, 28b; 228a, 228b) einen Auslöse-/Blockiermechanismus (66, 266) umfasst.

9. Antriebsvorrichtung nach einem der Ansprüche 2 bis 8, **dadurch gekennzeichnet, dass** der Hydrostempel (40; 240; 340) mittels des Auslöse-/Blockiermechanismus (66; 266) steuerbar ist.

10. Antriebsvorrichtung nach einem der vorhergehenden Ansprüche, **dadurch gekennzeichnet, dass** jeder Verdrängungskörper (36a, 36b; 236a, 236b; 336b) gleitdichtend mit der Seitenwand (46) des Hohlkörpers (26a, 26b; 226a, 226b; 326a, 326b) abschließt.

11. Antriebsvorrichtung nach einem der vorhergehenden Ansprüche, **dadurch gekennzeichnet, dass** die Rohrleitung (34; 234) starr ausgebildet ist und Führungsschlitze (42a, 42b) aufweist, in die Nocken an den Stirnflächen der Wellen (14) eingreifen.

12. Antriebsvorrichtung nach einem der vorhergehenden Ansprüche, **dadurch gekennzeichnet, dass** der Hohlkörper (26a, 26b; 226a, 226b; 326a, 326b) ein Hohlzylinder ist und dass der Verdrängungskörper (36a, 36b; 236a, 236b; 336b) als Zylinder ausgebildet ist, wobei das Volumen des Verdrängungskörpers (36a, 36b; 236a, 236b; 336b) in etwa die Hälfte des Innenvolumens des Hohlzylinders ausmacht.

13. Antriebsvorrichtung nach einem der vorhergehenden Ansprüche, **dadurch gekennzeichnet, dass** der Verdrängungskörper (36a, 36b; 236a, 236b; 336b) einen Grundkörper (48a, 48b) aus einem Material mit geringem spezifischen Gewicht und eine Platte (50a, 50b) aus einem Material mit einem hohen spezifischen Gewicht aufweist.

14. Antriebsvorrichtung nach einem der vorhergehenden Ansprüche, **dadurch gekennzeichnet, dass** für jeden Hohlkörper (26a, 26b; 226a, 226b; 326a, 326b) wenigstens eine Belüftungsvorrichtung und/oder eine Befüllungsvorrichtung vorgesehen ist.

15. Antriebsvorrichtung nach einem der vorhergehenden Ansprüche, **dadurch gekennzeichnet, dass** eine Druckerzeugungsvorrichtung (360) vorgesehen ist.

16. Antriebsvorrichtung nach einem der vorhergehenden Ansprüche, **dadurch gekennzeichnet, dass** die folgenden Vorrichtungen: Brems- und/oder Stoppvorrichtung, Auslenkvorrichtung (28a, 28b; 228a, 228b), Belüftungsvorrichtung, Befüllungsvorrichtung, Auslöse-/Blockiermechanismus (66; 266) magnetisch, mechanisch, elektronisch, hydraulisch, pneumatisch oder mittels Kombinationen hiervon aktivierbar, insbesondere schalt- und steuerbar sind.

17. Antriebsvorrichtung nach einem der vorhergehenden Ansprüche, **dadurch gekennzeichnet, dass** eine Vielzahl von Rotationselementen (16; 116a, 116b, 116c; 316) vorgesehen sind, wobei wenigstens ein Rotationselement (16; 116a, 116b, 116c; 316) lösbar mit der Welle (14; 114) verbunden ist.

18. Verfahren zum Betreiben einer Antriebsvorrichtung nach einem der Ansprüche 1 bis 17, wobei die Antriebsvorrichtung (10) einen Grundzustand aufweist, in dem das Rotationselement (16; 116a,116b,116c; 316) vertikal ausgerichtet ist, die beiden Hohlkörper (26a, 26b; 226a, 226b; 326a, 326b) des Rotationselements (16; 116a, 116b, 116c; 316) übereinander stehen und sich Fluid in dem oberen Hohlkörper (26a, 26b; 226a, 226b; 326a, 326b) befindet, und einen Zwischenzustand, in dem das Rotationselement (16; 116a, 116b, 116c) vertikal ausgerichtet ist, die beiden Hohlkörper (26a, 26b; 226a, 226b; 326a, 326b) des Rotationselements (16; 116a, 116b, 116c; 316) übereinander stehen und sich Fluid in dem unteren Hohlkörper (26a, 26b; 226a, 226b; 326a, 326b) befindet,
**dadurch gekennzeichnet, dass**
das Rotationselement (16; 116a, 116b, 116c; 316) aus seinem Grundzustand ausgelenkt wird,
das Rotationselement (16; 116a,116b,116c; 316) in den Zwischenzustand geschwenkt wird, wobei beim Übergang von dem Grundzustand in den Zwischenzustand die Welle (14; 114) in eine Drehbewegung versetzt wird und beim Übergang vom Zwischenzustand in den Grundzustand der Verdrängungskörper (36a, 36b; 236a, 236b; 336b) des unteren Hohlkörpers (26a, 26b; 226a, 226b; 326a, 326b) das Fluid durch die Rohrleitung (34; 234) in den oberen Hohlkörper (26a, 26b; 226a, 226b; 326a, 326b) presst.
